# EUROPEAN PATENT APPLICATION

(11) **EP 4 830 993 A2**
(43) Date of publication of application: **28.10.2026**
(21) Application number: 26173444.6
(22) Date of filing: 20.04.2026
(51) Int. Cl.: B60N 2/28

(54) **CHILD VEHICLE SEAT SYSTEM WITH A-LOCK**

(30) Priority: 21.04.2025 US 202563791995 P; 08.12.2025 US 202563933809 P; 08.12.2025 US 202563933835 P
(71) Applicant: Wonderland Switzerland AG, 6312 Steinhausen (CH)
(72) Inventor: Mason, Kyle S., 6312 Steinhausen (CH); Bowers, Patrick J. G., 6312 Steinhausen (CH); Cutajar, Julia, 6312 Steinhausen (CH); Keebler, Nathaniel W., 6312 Steinhausen (CH); Eggert-Crowe, Colin F., 6312 Steinhausen (CH); Clemmer, Lance J., 6312 Steinhausen (CH); Lehman, David A., 6312 Steinhausen (CH); Hartenstine, Curtis M., 6312 Steinhausen (CH); Gearhart, Samuel, 6312 Steinhausen (CH)
(74) Representative: Boult Wade Tennant LLP

(57) **Abstract**

A child seat (24) installable on a vehicle seat includes a seat bottom (28) and a seat back (26) extending from the seat bottom. A harness assembly (100) is connected with the seat bottom (28) and the seat back (26). The harness assembly (100) includes a harness adjuster (120) arranged at the seat bottom and an adjustment strap (122) extending through the harness adjuster (120). At least one cover member (160, 162) extends proximate a front of the harness adjuster (122). The adjustment strap extends about the at least one cover member. A strap path defined by the at least one cover member has a serpentine configuration along which the adjustment strap is movable relative to the harness adjuster.

## Description

### CROSS REFERENCE TO RELATED APPLICATIONS

This application claims the benefit of U.S. Application No. 63/791,995, filed on April 21, 2025, U.S. Application No. 63/933,809, filed on December 08, 2025, and U.S. Application No. 63/933,835, filed on December 08, 2025, which are incorporated herein by reference in their entirety.

### FIELD

Embodiments of the present disclosure relate to the art of child restraint systems for use in a vehicle, and more particularly to a support base and child seat of a child restraint system.

### BACKGROUND

A child restraint system is designed to protect a child from injury or death during a collision of a vehicle. Existing child restraint systems commonly include a child seat having a back portion, a seat portion, and a harness to restrain a child within the child seat.

The harness for a child seat is selectively tightened or loosened and then held in place by a central front adjuster ("CFA"), also referred to as a harness adjuster or an "A-lock." A-locks are commonly used to secure car seat harnesses in place to maintain a snug fit to the child within the car seat. To secure the harness, the A-lock utilizes a clamping feature, for example a series of teeth or the like, to engage with the harness tether (e.g., webbing). It is desirable to prevent debris from entering the A-lock or to minimize the amount of debris that enters the A-lock.

### BRIEF DESCRIPTION

According to an embodiment, a child seat installable on a vehicle seat includes a seat bottom and a seat back extending from the seat bottom. A harness assembly is connected with the seat bottom and the seat back. The harness assembly includes a harness adjuster arranged at the seat bottom and an adjustment strap extending through the harness adjuster. At least one cover member extends proximate a front of the harness adjuster. The adjustment strap extends about the at least one cover member. A strap path defined by the at least one cover member has a serpentine configuration along which the adjustment strap is movable relative to the harness adjuster.

In addition to one or more of the features described above, or as an alternative, in further embodiments the at least one cover member is a single cover member.

In addition to one or more of the features described above, or as an alternative, in further embodiments the at least one cover member is a pair of cover members.

In addition to one or more of the features described above, or as an alternative, in further embodiments the pair of cover members is in an overlapping configuration when the strap path has the serpentine configuration.

In addition to one or more of the features described above, or as an alternative, in further embodiments the pair of cover members includes an upper cover member and a lower cover member. In the overlapping configuration, the upper cover member is positioned between the seat bottom and the lower cover member.

In addition to one or more of the features described above, or as an alternative, in further embodiments the adjustment strap is freely movable to loosen the harness assembly when the pair of cover members is in the overlapping configuration.

In addition to one or more of the features described above, or as an alternative, in further embodiments the lower cover member is movable relative to the upper cover member and the seat bottom in response to application of a force to an exposed end of the adjustment strap.

In addition to one or more of the features described above, or as an alternative, in further embodiments the pair of cover members is transformable to a second configuration in response to application of a force to an exposed end of the adjustment strap.

In addition to one or more of the features described above, or as an alternative, in further embodiments in the second configuration, the pair of cover members are separated from one another.

In addition to one or more of the features described above, or as an alternative, in further embodiments in the second configuration, the strap path defined by the pair of cover members has a generally linear configuration.

In addition to one or more of the features described above, or as an alternative, in further embodiments the pair of cover members includes an upper cover member and a lower cover member, and in a second configuration, the upper cover member remains in contact with an upper surface of the adjustment strap.

In addition to one or more of the features described above, or as an alternative, in further embodiments the at least one cover member is formed from a fabric material.

According to an embodiment, a child seat installable on a vehicle seat includes a seat bottom and a seat back extending from the seat bottom. The seat bottom has a strap receiving surface that defines a strap path and at least one slot to receive debris. A harness assembly is connected with the seat bottom and the seat back. The harness assembly includes a harness adjuster arranged at the seat bottom and an adjustment strap extending through the harness adjuster. The adjustment strap is selectively movable along the strap path.

In addition to one or more of the features described above, or as an alternative, in further embodiments the at least one slot is positioned between a front of the seat bottom and the harness adjuster.

In addition to one or more of the features described above, or as an alternative, in further embodiments the at least one slot is positioned proximate a front of the harness adjuster.

In addition to one or more of the features described above, or as an alternative, in further embodiments the harness adjuster includes a housing and the at least one slot is vertically aligned with the housing.

In addition to one or more of the features described above, or as an alternative, in further embodiments the at least one slot is positioned in overlapping arrangement with the strap path.

In addition to one or more of the features described above, or as an alternative, in further embodiments the at least one slot is arranged at an angle relative to a longitudinal axis of the adjustment strap.

In addition to one or more of the features described above, or as an alternative, in further embodiments the harness adjuster includes a lever rotatable about an axis of rotation to selectively lock the adjustment strap against movement along the strap path. The at least one slot is parallel to the axis of rotation.

In addition to one or more of the features described above, or as an alternative, in further embodiments the at least one slot includes a plurality of slots axially spaced along the strap path.

In addition to one or more of the features described above, or as an alternative, in further embodiments the at least one slot arranged at the seat bottom is configured to receive debris during movement of the adjustment strap along the strap path.

According to an embodiment, a child seat installable on a vehicle seat includes a seat bottom and a seat back extending from the seat bottom. A harness assembly is connected with the seat bottom and the seat back. The harness assembly includes a harness adjuster arranged at the seat bottom and an adjustment strap extending through the harness adjuster. The adjustment strap has a non-linear configuration such that debris arranged at the adjustment strap is configured to fall therefrom via gravity.

In addition to one or more of the features described above, or as an alternative, in further embodiments the adjustment strap has a curved configuration including a curvature that extends perpendicular to a longitudinal axis of the adjustment strap.

In addition to one or more of the features described above, or as an alternative, in further embodiments the adjustment strap has the non-linear configuration forward of the harness adjuster.

In addition to one or more of the features described above, or as an alternative, in further embodiments the adjustment strap has the non-linear configuration at the harness adjuster.

In addition to one or more of the features described above, or as an alternative, in further embodiments a portion of the adjustment strap at a central longitudinal axis of the adjustment strap is positioned vertically above a lateral side of the adjustment strap.

In addition to one or more of the features described above, or as an alternative, in further embodiments an uppermost surface of the adjustment strap is arranged at a longitudinal axis of the adjustment strap.

In addition to one or more of the features described above, or as an alternative, in further embodiments the adjustment strap has an inverted U-shape.

According to an embodiment, a child seat installable on a vehicle seat includes a seat bottom and a seat back extending from the seat bottom. A harness assembly is connected with the seat bottom and the seat back. The harness assembly includes a harness adjuster arranged at the seat bottom and an adjustment strap extending through the harness adjuster. A sleeve is mounted on the adjustment strap at a location external to the harness adjuster. The sleeve is configured to frictionally slide relative to the adjustment strap as the adjustment strap moves relative to the harness adjuster.

In addition to one or more of the features described above, or as an alternative, in further embodiments the sleeve is arranged at a portion of the adjustment strap external to the seat bottom.

In addition to one or more of the features described above, or as an alternative, in further embodiments the sleeve is movable related to the seat bottom.

In addition to one or more of the features described above, or as an alternative, in further embodiments the sleeve is fixed related to the seat bottom.

In addition to one or more of the features described above, or as an alternative, in further embodiments the sleeve has a body including a first opening connected to a second opening and the adjustment strap extends through the body between the first opening and the second opening.

In addition to one or more of the features described above, or as an alternative, in further embodiments a cross-sectional area of the first opening is substantially identical to the cross-sectional area of the adjustment strap.

In addition to one or more of the features described above, or as an alternative, in further embodiments the sleeve is formed from a thermoplastic elastomer.

In addition to one or more of the features described above, or as an alternative, in further embodiments the sleeve is formed from a tightly-woven material.

According to an embodiment, a child seat installable on a vehicle seat includes a seat bottom and a seat back extending from the seat bottom. A harness assembly is connected with the seat bottom and the seat back. The harness assembly includes a harness adjuster arranged at the seat bottom and an adjustment strap extending through the harness adjuster. A cover is mounted to at least one of the harness adjuster and the seat bottom. The cover is arranged at a location external to the harness adjuster and is at least one of shaped and positioned to direct debris away from the harness adjuster.

In addition to one or more of the features described above, or as an alternative, in further embodiments the harness assembly includes a release actuator and the cover is shaped and/or positioned to direct the debris away from the release actuator.

In addition to one or more of the features described above, or as an alternative, in further embodiments the cover surrounds a front of the harness adjuster and has a front opening through which the adjustment strap is extendable into the harness adjuster.

In addition to one or more of the features described above, or as an alternative, in further embodiments the harness adjuster is substantially enclosed by the cover.

In addition to one or more of the features described above, or as an alternative, in further embodiments the cover is arranged at a peak of the harness adjuster.

In addition to one or more of the features described above, or as an alternative, in further embodiments the harness adjuster includes a lever rotatable about an axis and the cover extends over a pivoting portion of the lever.

In addition to one or more of the features described above, or as an alternative, in further embodiments the harness adjuster is configured to prevent the debris from entering the harness adjuster from above.

According to an embodiment, a child seat installable on a vehicle seat includes a seat bottom and a seat back extending from the seat bottom. A harness assembly is connected with the seat bottom and the seat back. The harness assembly includes a harness adjuster arranged at the seat bottom and an adjustment strap extending through the harness adjuster. The harness adjuster includes a lever rotatable about an axis and a clearance for receiving the adjustment strap at least partially defined by the lever. The clearance is disposed vertically above the lever.

In addition to one or more of the features described above, or as an alternative, in further embodiments the lever is rotatable about the axis to transform a tension applied to the adjustment strap by the harness adjuster. The lever is rotatable toward a seat support surface of the seat bottom to reduce the tension applied to the adjustment strap.

In addition to one or more of the features described above, or as an alternative, in further embodiments the harness adjuster is arranged within a cavity formed in a seat support surface of the seat bottom. The harness adjuster is offset from a bottom of the cavity to prevent debris on the bottom of the cavity from reaching the harness adjuster.

In addition to one or more of the features described above, or as an alternative, in further embodiments the harness assembly is positioned such that the adjustment strap is arranged at an angle relative to a horizontal plane at a location directly upstream from the harness adjuster to prevent debris at the adjustment strap from entering the harness adjuster.

In addition to one or more of the features described above, or as an alternative, in further embodiments an opening is formed at the seat bottom and the adjustment strap extends through the opening to an exterior of the child seat. The clearance of the harness adjuster is positioned vertically above the opening.

According to an embodiment, a child seat installable on a vehicle seat includes a seat bottom and a seat back extending from the seat bottom. A harness assembly is connected with the seat bottom and the seat back. The harness assembly includes a harness adjuster arranged at the seat bottom and an adjustment strap extending through the harness adjuster. The harness adjuster is configured to apply a tension to the adjustment strap at an area of contact and the adjustment strap extending from the area of contact in at least one direction has a sloped configuration.

In addition to one or more of the features described above, or as an alternative, in further embodiments the adjustment strap is selectively movable along a strap path and the area of contact forms a vertical peak of the strap path proximate the harness adjuster.

In addition to one or more of the features described above, or as an alternative, in further embodiments an opening is formed at the seat bottom and the adjustment strap extends through the opening to an exterior of the child seat. The area of contact being positioned vertically above the opening.

In addition to one or more of the features described above, or as an alternative, in further embodiments the adjustment strap extends at an angle between the area of contact and the opening.

In addition to one or more of the features described above, or as an alternative, in further embodiments the harness adjuster includes a lever rotatable about an axis and a clearance for receiving the adjustment strap at least partially defined by the lever. The clearance is disposed vertically above the lever.

In addition to one or more of the features described above, or as an alternative, in further embodiments a thickness of the clearance varies based on a rotational position of the lever.

In addition to one or more of the features described above, or as an alternative, in further embodiments the harness adjuster is arranged within a cavity formed at a seat support surface of the seat bottom. The harness adjuster is offset from a bottom of the cavity.

### BRIEF DESCRIPTION OF THE DRAWINGS

The following descriptions should not be considered limiting in any way. With reference to the accompanying drawings, like elements are numbered alike:
FIG. 1A is a perspective view of a child seat according to an embodiment;
FIG. 1B is a side view of the child seat of FIG. 1A mounted to a vehicle seat in a toddler configuration according to an embodiment;
FIG. 1C is a front view of the child seat of FIGS. 1A and 1B according to an embodiment;
FIG. 2A is a front view of a harness assembly having a harness in a buckled configuration according to an embodiment;
FIG. 2B is a front view of the harness assembly of FIG. 2A with the harness in an unbuckled configuration according to an embodiment;
FIG. 3A is a perspective view of a child seat having an exploded harness adjuster according to an embodiment;
FIG. 3B is a detailed perspective view of the exploded harness adjuster of FIG. 3A according to an embodiment;
FIG. 3C is a cross-sectional view of the harness adjuster of FIGS. 3A and 3B installed within the child seat according to an embodiment;
FIG. 4A is a cross-sectional view of a child seat including a pair of cover members arranged in an overlapping configuration according to an embodiment;
FIG. 4B is a cross-sectional view of the child seat of FIG. 4A with the pair of cover members in a separated configuration according to an embodiment;
FIG. 5 is a cross-sectional view of a child seat including a harness adjuster and at least one slot proximate the harness adjuster according to an embodiment;
FIG. 6 is a perspective view of a harness adjuster and a plurality of slots arranged along a strap path of an adjustment strap according to an embodiment;
FIG.7A is a cross-sectional view of a child seat including a harness adjuster according to an embodiment;
FIG. 7B is a detailed cross-sectional view of the harness adjuster according to an embodiment;
FIG. 8A is a cross-sectional view of a harness adjuster including a cover according to an embodiment;
FIG. 8B is a perspective view of a harness adjuster encased within a cover according to an embodiment;
FIG. 8C is a cross-sectional view of a harness adjuster including a cover arranged at a peak point according to an embodiment;
FIG. 8D is a cross-sectional view of a harness adjuster including an internal guard according to an embodiment;
FIG. 9A is a perspective view of a sleeve of an adjustment belt according to an embodiment;
FIG. 9B is a perspective view of a sleeve of an adjustment belt according to another embodiment;
FIG. 9C is a perspective view of a sleeve of an adjustment belt according to yet an embodiment;
FIG. 9D is a perspective view of a sleeve of an adjustment belt according to yet an embodiment;
FIG. 9E is a cross-sectional view of an adjustment belt having a sleeve slidably engaged therewith according to an embodiment;
FIG. 10 is a perspective view of an adjustment belt having a curved configuration over a longitudinal axis of the adjustment belt according to an embodiment;
FIG. 11 is a perspective view of a child seat including an adjustment belt extending from a front of the seat bottom according to an embodiment;
FIG. 12A is a detailed perspective view of the adjustment belt of FIG. 11 according to an embodiment;
FIG. 12B is a detailed perspective view of the adjustment belt of FIG. 11 according to another embodiment;
FIG. 12C is a detailed perspective view of an array of features at an axial location of the adjustment belt of FIG. 12B according to yet an embodiment;
FIG. 12D is a detailed perspective view of the adjustment belt of FIG. 11 according to yet an embodiment;
FIG. 13A is a perspective view of a harness adjuster including a brush feature according to an embodiment;
FIG. 13B is a perspective view of a harness adjuster including a screen according to an embodiment;
FIG. 14A is a perspective view of a pocket feature including a brush feature according to an embodiment;
FIG. 14B is an end view of the pocket feature of FIG. 14A according to an embodiment;
FIG. 15A is a perspective view of a pocket feature according to another embodiment;
FIG. 15B is a cross-sectional view of a pocket feature installed about an adjustment belt according to an embodiment;
FIG. 16 is a schematic diagram of a sweeper operable to remove debris from an adjustment belt according to an embodiment; and
FIG. 17 is a schematic diagram of a sweeper having another configuration according to an embodiment.

### DETAILED DESCRIPTION

A detailed description of one or more embodiments of the disclosed apparatus and method are presented herein by way of exemplification and not limitation with reference to the Figures.

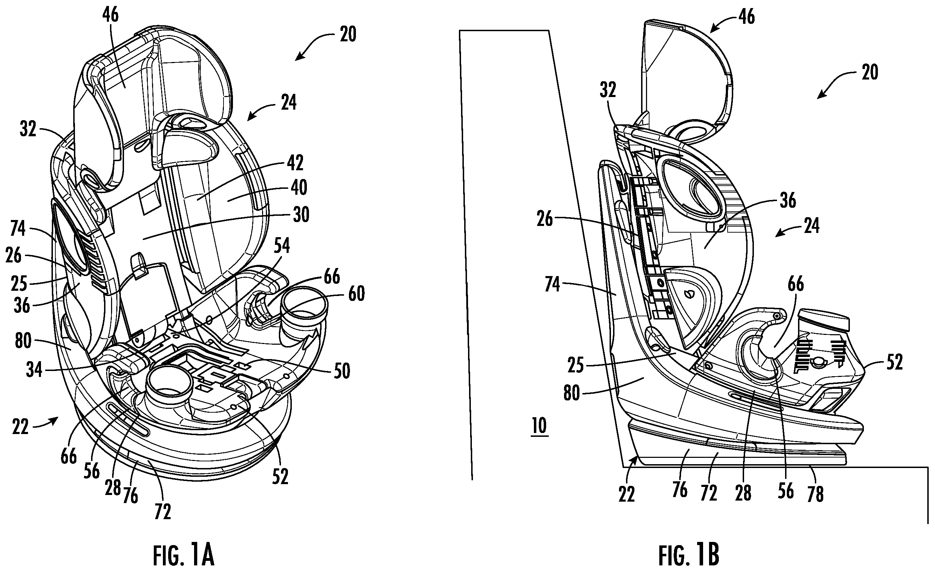

With reference now to FIGS. 1A-1C, an example of a child seat system 20 is illustrated. As shown, the child seat system 20 includes a support base 22 that can be detachably fixed to a vehicle seat 10 (see FIG. 1B), such as via a latch or anchor mechanism, not shown in the FIGS. This latch or anchor system often used is sometimes referred to as a "lower anchor and tether for children" e.g., LATCH system. Alternatively, or in addition, the support base 22 may be detachably fixed to a vehicle seat 10 via a vehicle belt associated with the vehicle seat 10.

The child seat system 20 additionally includes a child seat 24 associated with the support base 22. In an embodiment, the child seat 24 is detachably coupled to the support base 22, thereby allowing the child seat 24 to be separated from the support base 22. Alternatively, the support base 22 and at least a portion of the child seat 24 may be permanently connected or affixed together, as will be described in more detail below. As used herein the term "permanently connected" identifies embodiments where the child seat 24 or a portion thereof is not intended to be disassembled from the support base 22 by a user.

The child seat 24 includes a seat back 26 and a seat bottom 28 arranged at an angle relative to the seat back 26. The seat bottom 28 may but need not be configured to removably couple to the seat back 26. In the illustrated, non-limiting embodiments, the seat back 26 is formed by a seat shell 25 of the child seat 24 and includes a seat back having an upright support surface 30 generally facing forward and that extends from a first end or top 32 of the seat back 26 to a second, opposite end or bottom 34 of the seat back 26. A first upright side member 36 may be arranged at a first side 38 of the upright support surface 30 and a second upright side member 40 may be arranged at a second, opposite side 42 of the upright support surface 30. The first and second upright side members 36, 40 therefore form the left side and the right side of the seat back 26, respectively. As shown, the first and second upright side members 36, 40 extend forward from the upright support surface 30. The first and second upright side members 36, 40 may extend generally orthogonally to the upright support surface 30 or alternatively, may extend therefrom at another angle, such as an angle greater than 90° for example. Accordingly, the upright support surface 30 and the first and second upright side members 36, 40 define a backrest region or upright support cavity within which an upper body of a child is received.

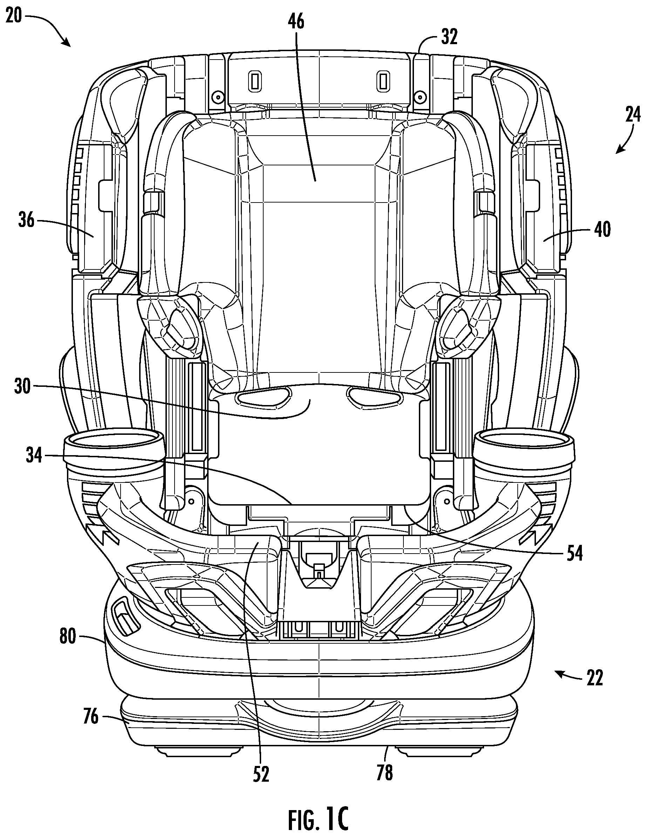

In the illustrated, non-limiting embodiments, the seat back 26 of the child seat 24 includes a headrest 46. The headrest 46 may be attached to or integral with the seat back 26 or may be removably coupled thereto. The headrest 46 may be stationary, or in some embodiments, may be configured to move relative to the upright support surface 30. For example, the headrest 46 may be configured to translate relative to the upright support surface 30 between a retracted position (FIG. 1C) and an extended position (FIGS. 1A and 1B), allowing for adjustment based on the size of the child positioned within the child seat 24. However, it should be appreciated that embodiments where the seat back 26 does not include a headrest 46 are also contemplated herein.

The seat bottom 28 of the child seat 24 may include a seat support surface 50 facing generally upwardly and that extends from a first end or front 52 to a second end or back 54 of the seat bottom 28. A first seat side member 56 may be arranged at a first side 58 of the seat support surface 50 and a second seat side member 60 may be arranged at a second, opposite side 62 of the seat support surface 50. The first seat side member 56 and the second seat side member 60 respectively extend upwardly and from the left side and the right side of the seat portion. The seat support surface 50 and the first and second seat side members 56, 60 combine to define a region within which at least part of a lower body of a child may be received.

As shown, the seat side members 56 and 60 extend at an angle from the seat support surface 50. The angle of the first seat side member 56 relative to the seat support surface 50 may but need not be the same as the angle of the first upright side member 36 relative to the upright support surface 30. Similarly, the angle of the second seat side member 60 relative to the seat support surface 50 may but need not be the same as the angle of the second upright side member 40 relative to the upright support surface 30. In the illustrated, non-limiting embodiment, the first seat side member 56 has a first slot 66a and the second seat side member 60 has a second slot 66b formed therein. These slots 66a, 66b are configured to function as a lap belt guide during at least one mode of use of the child seat 24. In some modes of operation of the child seat 24, the slots 66a and 66b may be configured to receive and position a lap belt portion of a vehicle restraint or a separate restraint belt to secure a child within the child seat 24.

The seat bottom 28 of the child seat 24 may also be formed by the seat shell 25 of the child seat 24. In such embodiments, the seat back 26 and the seat bottom 28 may be integrally formed. However, in other embodiments, the seat bottom 28 of the child seat 24 may be removably connectable to the child seat 24. In embodiments where the seat bottom 28 is separable from the child seat 24, the seat bottom 28 may be used independently from the remainder of the child seat 24 as a booster seat, positionable in direct contact with a surface of a vehicle seat 10.

With continued reference to FIGS. 1A-1C, in the illustrated, non-limiting embodiment, the support base 22 includes a base seat portion 72 and a base back portion 74. The support base 22 includes a first base member 76 having a bottom surface 78 suitable for placement on a support surface, such as the vehicle seat 10 for example, and a second base member 80 coupled to the first base member 76. In the illustrated, non-limiting embodiment, at least a portion of the second base member 80 is positioned in overlapping arrangement with an upper surface 82 of the first base member 76. In the embodiments shown, a base back portion 74 of the support base 22 is formed solely by the second base member 80, and a base seat portion 72 of the support base 22 is formed by the first base member 76 and the second base member 80, in combination.

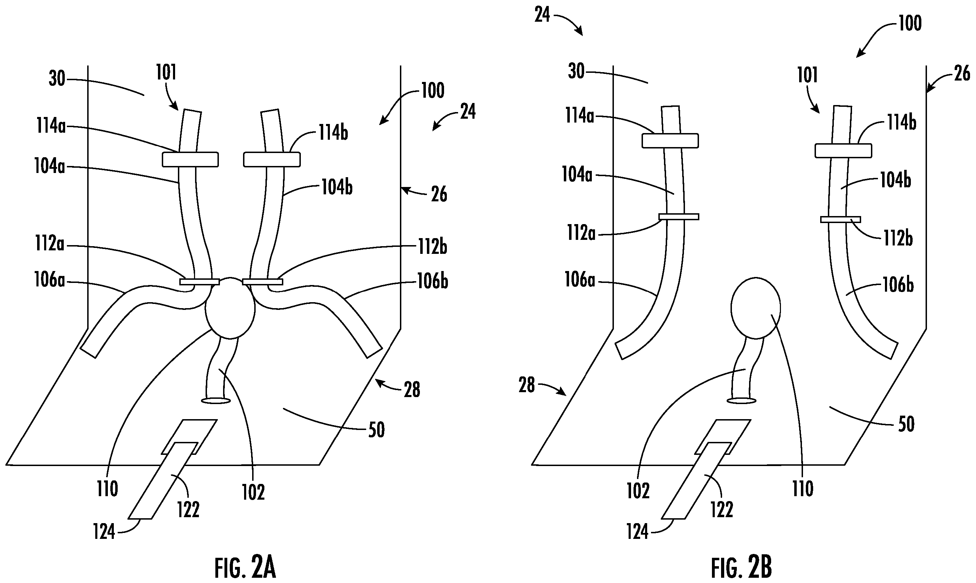

With continued reference to FIGS. 1A-1C and further reference to FIGS. 2A-2B, the child seat 24 may include a harness assembly 100 operable to limit movement of a child relative to the child seat 24. A harness 101 of the harness assembly 100 may include a crotch strap at least one shoulder strap, and/or at least one waist strap. In the illustrated, non-limiting embodiment, the harness assembly 100 is a five-point harness including a crotch strap 102, a first shoulder strap 104a, a second shoulder strap 104b, a first waist strap 106a and a second waist strap 106b. In the illustrated, non-limiting embodiment, the first shoulder strap 104a and the first waist strap 106a are integrally formed via a first piece of webbing and the second shoulder strap 104b and the second waist strap 106b are integrally formed via a second piece of webbing. In such embodiments, opposing ends of each piece of webbing are mounted to the child seat 24, such as at an interior or a backside of the seat back.

A buckle 110 may be arranged at a distal end of the crotch strap 102 and the shoulder straps 104a, 104b and waist straps 106a, 106b may be connected to one another and to the crotch strap 102 via the buckle 110. In an embodiment, a first crotch buckle connector 112a engageable with the buckle 110 is arranged at the first piece of webbing and a second crotch buckle connector 112b engageable with the buckle 110 is arranged at the second piece of webbing. In such embodiments, the upper portion of each piece of webbing extending from each crotch buckle connector 112a, 112b may be considered the respective shoulder straps 104a, 104b, and the lower portion of each piece of webbing may be considered the waist straps 106a, 106b. In some embodiments, the first and second shoulder straps 104a, 104b may be connectable to one another at a location remote from the crotch buckle connectors 112a, 112b. For example, a first chest connector114a may be arranged at one of the first shoulder strap 104a and the second shoulder strap 104b, and a second chest connector 114b removably couplable to the first chest connector 114a is arranged at the other of the first shoulder strap 104a and the second shoulder strap 104b. It should be appreciated that the harness assembly illustrated and described herein is intended as an example only and that a harness assembly having another suitable configuration is also within the scope of the disclosure.

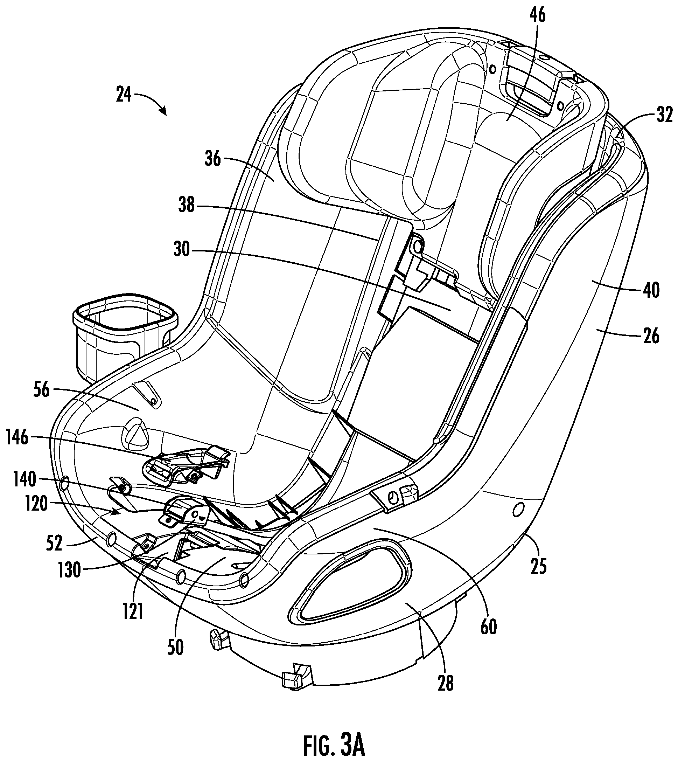

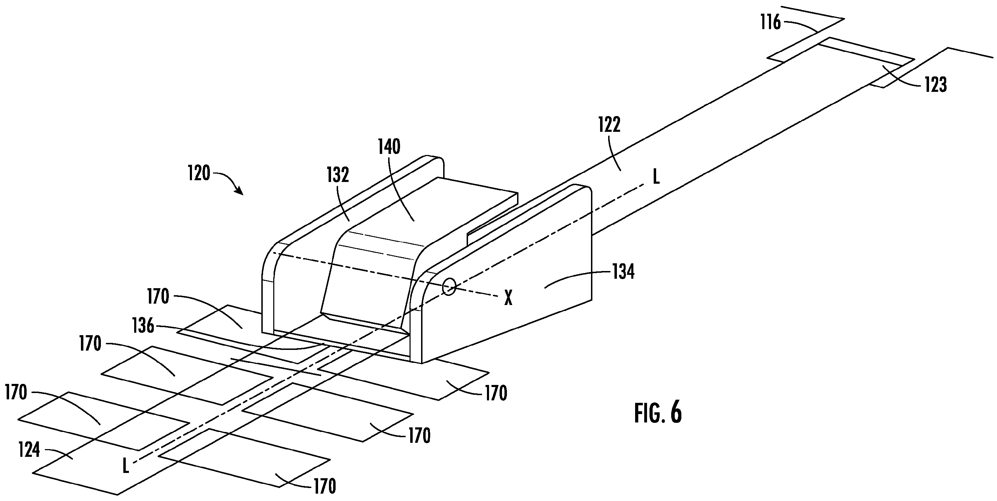

With continued reference to FIGS. 2A-2B and further reference to FIGS. 3A-3B, the harness assembly 100 may further include a harness adjuster 120, also referred to herein as an A-lock, operable to tension the straps 104a, 104b, 106a, 106b of the harness 101 to prevent the harness 101 from loosening during use. The harness adjuster 120 may be arranged within a cavity 121 formed at the seat support surface 50. An adjustment strap 122 may be operably coupled to the straps 104a, 104b, 106a, 106b of the harness 101, such as via a bracket 116 see FIG. 6). For example, a first end of the adjustment strap 122 may be connected to the bracket and a second, opposite end 124 of the adjustment strap 122 may be extendable through the harness adjuster 120. The adjustment strap 122 is arranged within the seat bottom 28, generally underneath the seat support surface 50 between the bracket and the harness adjuster 120. In an embodiment, the seat bottom 50 has a strap receiving surface adjustment strap 122

The second end 124 of the adjustment strap 122 may extend from the cavity 121 formed in the seat support surface 50 to an exterior of the child seat 24. A portion of the harness adjuster 120 exposed at the seat support surface 50 of the seat bottom 28 or an element operably coupled thereto (not shown) may operate as a release actuator of the harness adjuster 120. The adjustment strap 122 is movable along a strap receiving path defined by the strap receiving surface extending between the harness adjuster 120 and the front 52 of the child seat 24 during tension adjustment of the harness 101. A user may apply a force to the exposed, second end 124 of the adjustment strap 122 to increase a tension acting on the harness 101. As the user applies a force to the adjustment strap 122, the adjustment strap 122 is configured to move along the strap path such that a length of the portion of the adjustment strap 122 exposed at an exterior of the seat shell 25 increases. Further, a user may apply a force to the harness adjuster 120 to disengage the harness adjuster 120 from the adjustment strap 122, thereby releasing tension acting on the harness 101. With the tension removed, a user may pull on the harness 101 to loosen the harness by increasing the length of the exposed portion of the straps 104a, 104b, 106a, 106b. As a user reduces the tension in the harness, the adjustment strap 122 translates along the strap path such that the length of the exposed portion of the adjustment strap 122 is reduced.

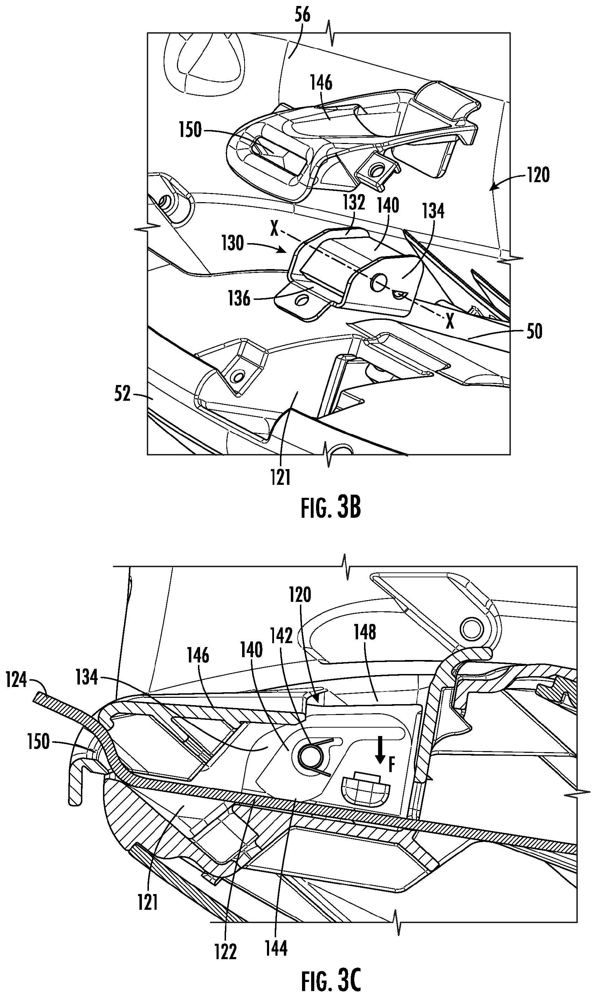

With continued reference to FIGS. 3A-3C, an example of a harness adjuster 120 is illustrated in more detail. As shown, the harness adjuster 120 may include a housing 130 and a lever 140 rotatably mounted to the housing 130. The housing 130 may be mechanically fastened to an internal surface of the seat bottom 28. In an embodiment, the housing 130 has a U or C-shaped configuration that defines two sidewalls 132, 134 oriented generally parallel to one another. The lever 140 may be rotatably mounted to housing 130 at a position between the sidewalls 132, 134. The lever 140 is rotatable about an axis X relative to the housing 130, such as between an engaged position (shown in FIGS. 3B and 3C) and a disengaged position. In an embodiment, a biasing member 142 is operably coupled to the lever 140 and is operable to bias the lever 140 toward the engaged position. As shown, the lever 140 is positioned such that a clearance for receiving the adjustment strap 122 is formed between the lever 140 and an adjacent surface of the housing 130. However, embodiments where the clearance is formed between the lever 140 and an adjacent surface of the seat shell 25 are also contemplated herein.

As shown, the housing 130 includes a connecting member 136 extending between and connected to or integrally formed with the sidewalls 132, 134. In such embodiments, the clearance may be defined between a surface 138 of the connecting member 136 facing the lever 140 and a surface 144 of the lever 140 closest to the connecting member 136. In an embodiment, a cover 146 is provided over at least a portion of the harness adjuster 120. As shown, the cover 146 may extend over the entirety or substantial entirety of the harness adjuster 120 and may cooperate with the seat bottom 28 to define an opening 150 through which the second end 124 of the adjustment strap 122 extends. As shown, the cover 146 may include an opening 148 or may provide access to the lever 140 to rotate the lever 140 from the engaged position to the disengaged position. The cover 146 may be used as a hand guard while also potentially preventing contamination of the harness adjuster 120.

A height of the clearance may vary as the lever 140 rotates about its axis X. When the lever 140 is in the engaged position, the clearance may have a first height, and when the lever 140 is in the disengaged position, the clearance may have a second height, greater than the first height. In an embodiment, the first height is less than a thickness of the adjustment strap 122. The lever 140 may be formed with a cam surface 144 to achieve this variation in the height of the clearance as the lever 140 rotates about its axis X. In such embodiments, the cam surface 144 may contact and apply a force to the adjustment strap 122. In other embodiments, one or more engagement members (not shown), such as one or more teeth for example, may protrude radially from a periphery of the lever 140. In such embodiments, at least one engagement member is positioned proximate the connecting member 136 of the housing 130 when the lever 140 is in the engaged position, and the at least one engagement member is rotated away from connecting member 136 of the housing 130 when in the disengaged position.

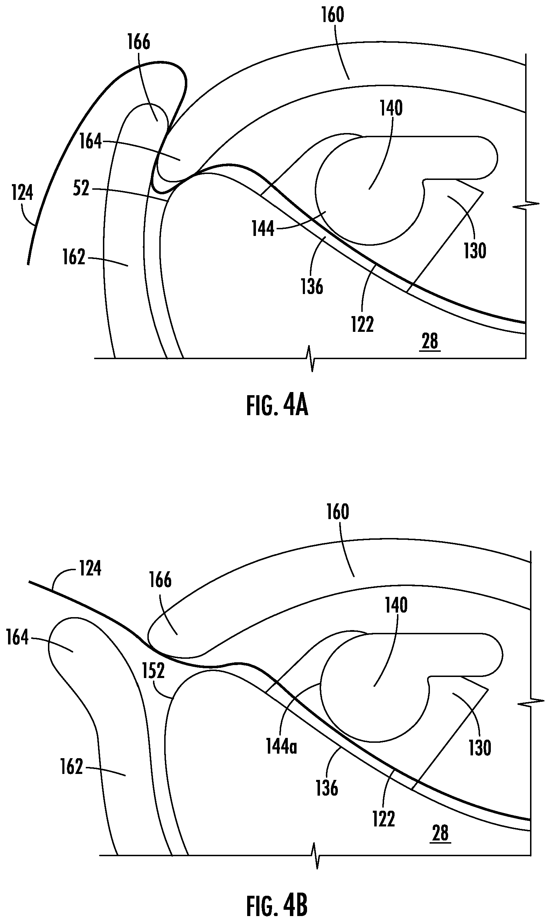

It may be desirable to minimize the contaminants or debris that reaches the harness adjuster 120. This may be performed by directing particles of debris located at a surface of the adjustment strap 122 away from the harness adjuster 120. In the non-limiting embodiment illustrated in FIGS. 4A-4B, the child seat 24 includes a first or upper cover member 160 and a second or lower cover member 162. The first cover member 160 and the second cover member 162 may be formed from a stiff or semi-rigid fabric material, or another suitable material. The first cover member 160 and the second cover member 162 may be formed by softgoods of the child seat 24, or alternatively, may be separate from the softgoods. In an embodiment, the first and second cover members 160a, 162 are positioned underneath the softgoods associated with the seat bottom 28 of the child seat 24. As shown in FIG. 4A, the pair of cover members 160, 162 may be positioned in overlapping arrangement at or proximate the front 52 of the seat bottom 28. For example, the first cover member 160 may be above the seat support surface 50 and the second cover member 162 may be arranged at the front 52 of the seat bottom 28. As shown, a portion of the first cover member 160 may be positioned between the seat bottom 28 and the second cover member 162.

The distal end 124 of the adjustment strap 122 extends between the overlapped first cover member 160 and the second cover member 162 to an exterior of the child seat 24. When the cover members 160, 162 are in this first, overlapping configuration shown in FIG. 4A, the strap path of the adjustment strap 122 has a first configuration, such as an S-shaped or serpentine configuration that curves around a distal end 164 of the first cover member 160 and a distal end 166 of the second cover member 162, respectively. The first and second cover members 160, 162 apply a pressure to the adjustment strap 122 and the engagement of the first and second cover members 160, 162 with the adjustment strap 122 prevents food particles or debris from entering into the interior of the seat bottom 28 and the harness adjuster 120 via the strap path.

At least one of the first and second cover members 160, 162 is movable relative to the other of the first and second cover members 160, 162 and to the seat bottom 28. For example, the distal end 166 of the second cover member 162 may be pulled away from the seat bottom 28, out of engagement with the first cover member 160. When the first and second cover members 160, 162 are in this separated configuration, as shown in FIG. 4B, the strap path of the adjustment strap 122 has a second configuration, different from the first configuration. The curvature formed in strap path when in the second configuration is significantly reduced. In an embodiment, the second configuration of the strap path is substantially linear.

The adjustment strap 122 of the harness 101 may be freely movable, such as to decrease the tension of the harness 101 for example, when the first and second cover members 160, 162 are in the overlapped configuration. Accordingly, as the tension of the harness 101 is reduced, the first and second cover members 160, 162 may remain in the first, overlapping configuration. However, in an embodiment, application of a force to the exposed end 124 of the adjustment strap 122 by a user, such as to increase the tension of the adjustment strap 122 and tighten the harness for example, may transform the first and second cover members 160, 162 to a second configuration. The force applied to the adjustment strap 122 may cause the outermost cover member, such as the second overlapping cover member 162 for example, to fold away from the seat bottom 28. The force applied to the adjustment strap 122 may also lift the end of the first cover member 160 away from the seat bottom 28 to form a more linear strap path. However, the distal end 164 of the first cover member 160 may remain engaged with a surface of the adjustment strap 122 when the first and second cover members 160a, 162 are in the separated configuration to block the flow of particles arranged at the surface of the adjustment strap 122 toward the harness adjuster 120.

Although a pair of cover members 160, 162 are illustrated and described herein, it should be appreciated that in other embodiments, the child seat 24 may include only a single cover member, such as the first or upper cover member 160 positioned proximate the seat support surface 50 for example. In such embodiments, the distal end 164 of the cover member 160 may overlap the front 52 of the seat bottom 28. As a result, the adjustment strap 122 will extend parallel to the front 52 of the seat bottom 28 and then wrap around the distal end 164 of the cover member 160 toward the opening 150. The inherent stiffness of the cover member 160 will retain the cover member 160 in this overlapping position until a force exceeding a threshold is applied to the exposed end 124 of the adjustment strap 122. Application of a force greater than the threshold to the adjustment strap 122 in a direction away from the child seat 24, such as to tighten the harness 101 for example, will cause the cover member 160 to rotate away from the seat bottom 28 (e.g., open), thereby straightening the strap path of the adjustment strap 122.

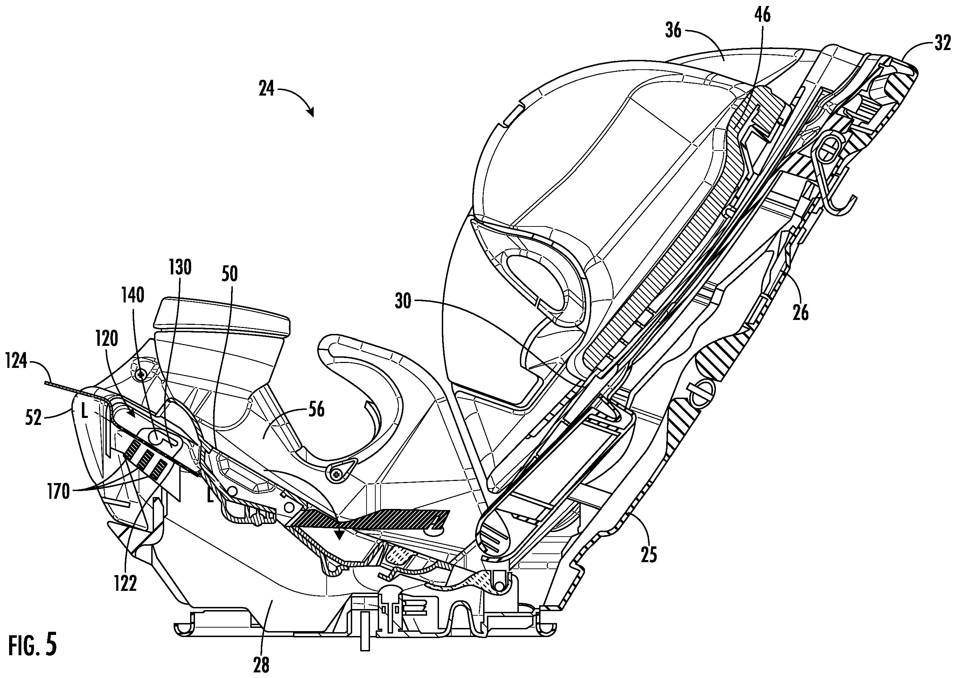

Alternatively, or in addition, at least one slot 170 may be formed in the seat bottom 28, proximate the housing 130 of the harness adjuster 120. With reference to FIGS. 5 and 6, the slots 170 may be arranged vertically above the harness adjuster 120, or alternatively or additionally, vertically beneath the harness adjuster 120. In the illustrated, non-limiting embodiment, a plurality of slots 170 are axially spaced along a longitudinal axis L of the adjustment strap 122. In such embodiments, the slots 170 may be uniformly spaced or may be non-uniformly spaced. The slots 170 may be oriented at a non-parallel angle relative to the longitudinal axis L of the adjustment strap 122. For example, the slots 170 may be oriented perpendicular to the longitudinal axis L of the adjustment strap 122 and/or parallel to the axis of rotation X of the lever 140.

The slots 170 may be formed at any suitable position along the strap path of the adjustment strap 122. As shown, one or more of the slots 170 may be positioned directly beneath the housing 130. Alternatively, or in addition, one or more of the slots 170 may be positioned forward of the harness adjuster 120, such as between the housing 130 and the front 52 of the seat bottom 28 for example. In embodiments including one or more slots 170 at a location offset or remote from the housing 130 of the harness adjuster 120, the one or more slots 170 may overlap with the strap path of the adjustment strap 122 such that the adjustment strap 122 is directly above or below the slots 170. The slots 170 formed in the seat bottom 28 may but need not extend beyond one or both lateral sides of the adjustment strap 122, and in some embodiments, may but need not extend beyond one or both lateral sides of the housing 130 of the harness adjuster 120.

During movement of the adjustment strap 122, particles or contaminants that are movable with the adjustment strap 122 along the strap path may fall via gravity into one or more of these slots 170. As a result, these particles or debris may accumulate within the slots 170 rather than within the interior of the harness adjuster 120. In embodiments including one or more slots 170 as described herein, the slots 170 may extend over only a portion of a depth of the seat bottom 28. Accordingly, the slots 170 may be sufficiently deep to receive contaminants therein at a position remote from the strap path. However, in other embodiments, one or more of the slots 170 may be through holes that extend to another surface of the seat bottom 28. In such embodiments, the slots 170 form channels or passageways through which debris may fall away from the child seat 24.

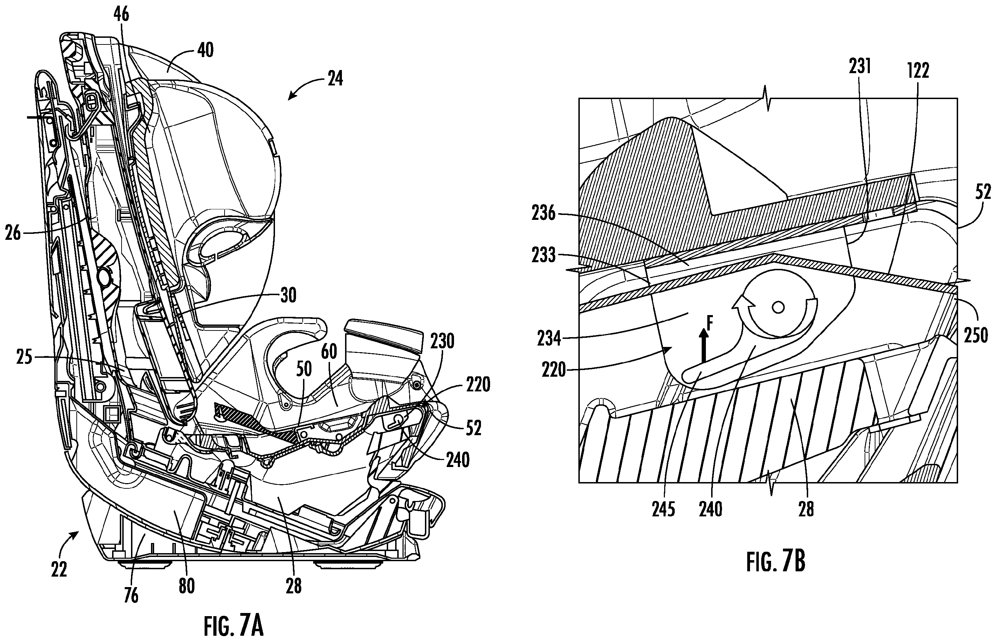

Another example of a child seat 24 including a harness adjuster 220 for tensioning an adjustment strap 122 is illustrated in FIGS. 7A and 7B. The harness adjuster 220 may be substantially identical to the harness adjuster 120 illustrated in FIGS 4A-4B and similar components may be similarly numbered. However, in the illustrated, non-limiting embodiment, the harness adjuster 220 is rotated 180 degrees about a horizontal axis, such as about the axis of rotation X of the lever 140, such that the connecting member 236 of the housing 230 is positioned proximate an underside of the seat support surface 50 and the sidewalls 232, 234 extend downwardly therefrom. As a result, the clearance defined between the lever 240 and the connecting member 236 of the housing 230 and through which the adjustment strap 122 is extendable is positioned vertically above the lever 240.

As shown, an opening 250 formed at the seat bottom 28 and through which the adjustment strap 122 extends to an exterior of the child seat 24, is positioned vertically beneath the clearance of the harness adjuster 220. The adjustment strap 122 may therefore be arranged at a non-parallel angle relative to a horizontal plane or may have a sloped configuration extending between the front 231 of the harness adjuster 220 and the opening 250 to prevent debris at the adjustment strap 122 from entering the harness adjuster 220. Tension may be applied to the adjustment belt 122 by the lever 240 at an area of contact along the strap path. This area of contact may form a vertical peak in the strap path of the adjustment strap 122 proximate the harness adjuster 220. In the illustrated, non-limiting embodiment, the adjustment strap 122 extends downwardly from this peak area of contact in a first direction, toward the front 231 of the harness adjuster 220, and extends downwardly from this peak area of contact in a second direction toward a back 233 of the harness adjuster 220. By positioning the adjustment strap 122 above the lever 240, such that the adjustment strap 122 is sloped both forward and rearward of the lever 240 for example, loose particles or debris arranged at a surface of the adjustment strap 122 may fall therefrom due to gravity as the adjustment strap moves relative to the lever 240. Unlike previous embodiments of the harness adjuster 120 where the lever 140 was transformed to the disengaged via application of a downward force to a handle of the lever, in an embodiment, the lever 240 of the harness adjuster 220 is transformable to the disengaged position by applying an upward force F to a handle 245 of the lever 240.

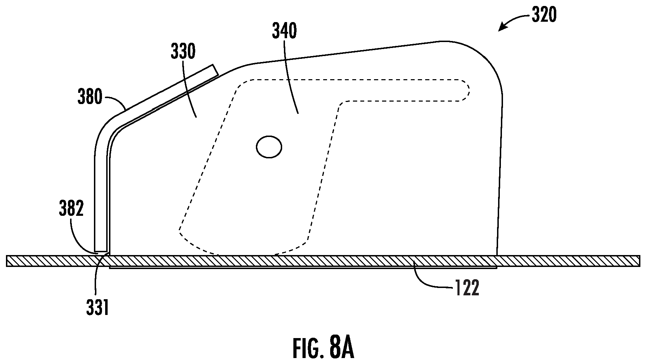

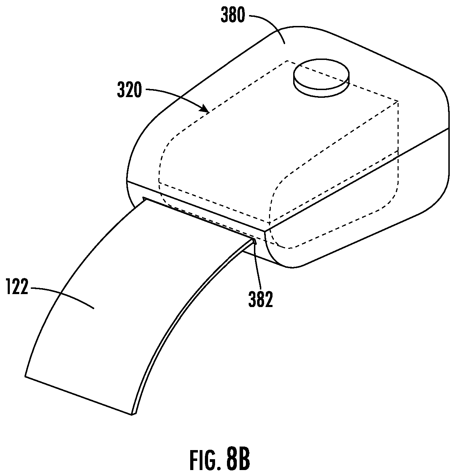

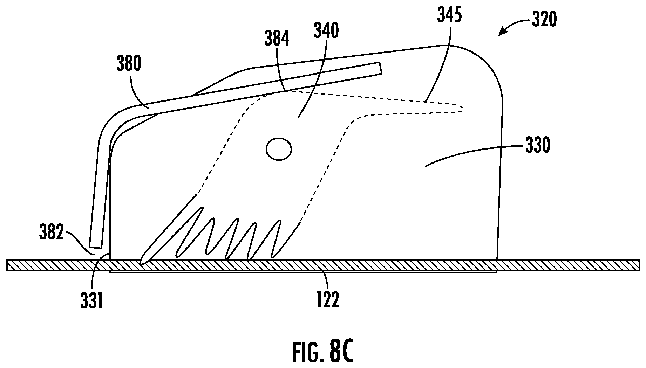

Another embodiment of a harness adjuster 320 is illustrated in FISG. 8A-8D. The illustrated harness adjusters may have a housing 330 and lever 340 rotatably mounted to the housing 330 as previously described with reference to FIGS. 4A and 4B. In the non-limiting embodiments illustrated in FIGS. 8A-8D, a cover 380 is located proximate an exterior of the harness adjuster 320. The cover 380 may be mounted to at least one of the housing 330 of the harness adjuster 320 and the seat bottom 28 of the child seat. As shown in FIG. 8B, the cover 380 may substantially enclose the entirety of the housing 330 of the harness adjuster 320. In such embodiments, the cover 380 may define a narrow opening 382 proximate a front 331 of the housing 330. A height of the narrow opening 382 may be substantially equal to or slightly larger than the thickness of the adjustment strap 122. In other embodiments, the cover 380 may extend about or overlap only a portion of the housing 330. In the illustrated, non-limiting embodiment of FIG. 8A, the cover 380 is arranged at only the front 331 of the housing 330. The covers 380 as described herein may be shaped and/or positioned to direct debris away from the harness adjuster 320. In the illustrated, non-limiting embodiments, each cover 380 extends generally to a surface of the adjustment strap 122. Accordingly, as the adjustment strap 122 slides along the strap path through the harness adjuster 320, engagement between the cover 380 and particles or debris arranged on the surface of the adjustment strap 122 blocks the particles and debris from entering an interior of the harness adjuster 120. With reference to FIG. 8C, a guard or cover 380 may be arranged at the peak or uppermost surface 384 of the harness adjuster 320. In the illustrated, non-limiting embodiment, the cover 380 extends over a pivoting portion of the lever 340 for example. Inclusion of such a cover 380 prevents debris from entering the harness adjuster 320 from above, such as during actuation of the harness adjuster 320 by a caregiver for example.

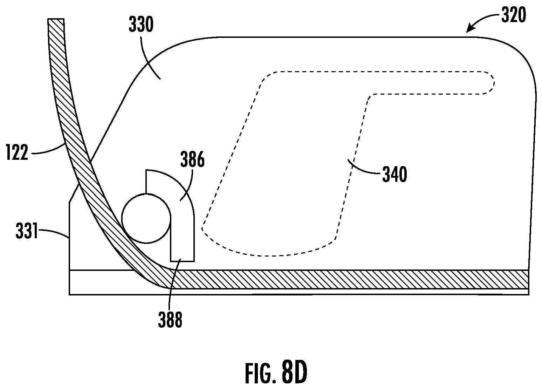

In another embodiment, as shown in FIG. 8D, a guard 386 may be arranged at an interior of the housing 330, such as between a forward end 331 of the housing 330 and the lever 340 that guides the adjustment strap 122 for example. As shown, the guard 386 may be connected to one or both sides of the housing 330. In an embodiment, the guard is 386 connected to and extends over the distance between the opposing sides of the housing 330 and may be oriented parallel to the axis X of the lever 340 for example. The guard 386 may have a rigid body, or alternatively, may include a semi-rigid body, such as formed from bristles or another element for example. The guard 386 may be positioned such that a distal end 388 thereof is in contact with or is located directly adjacent to a surface of the adjustment strap 122. As the adjustment strap 122 is drawn rearwardly along the strap path to loosen the harness 101, the guard 386 directs particles and debris at the surface of the adjustment strap 122 away from the clearance between the housing 330 and the lever 340.

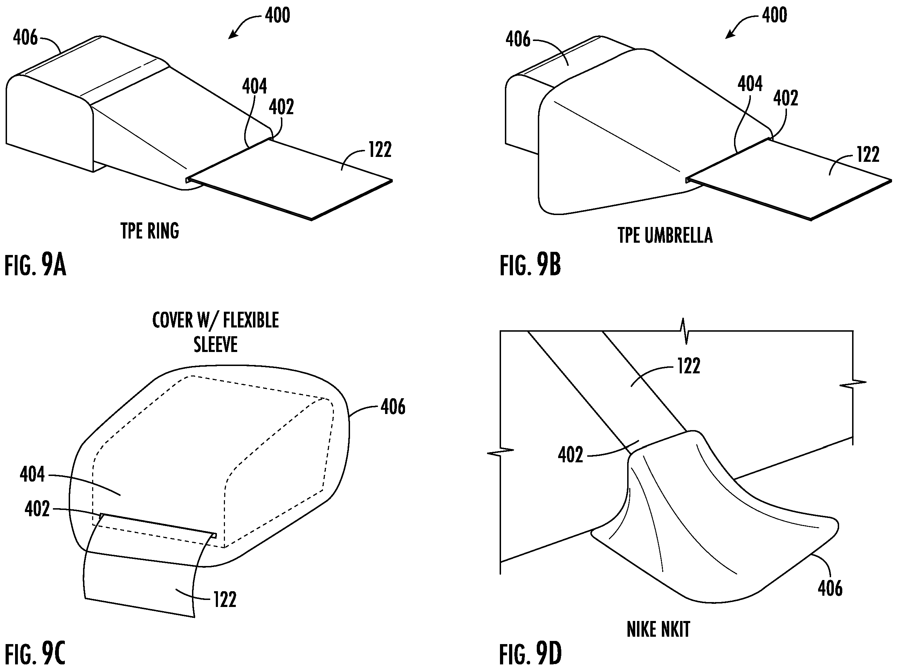

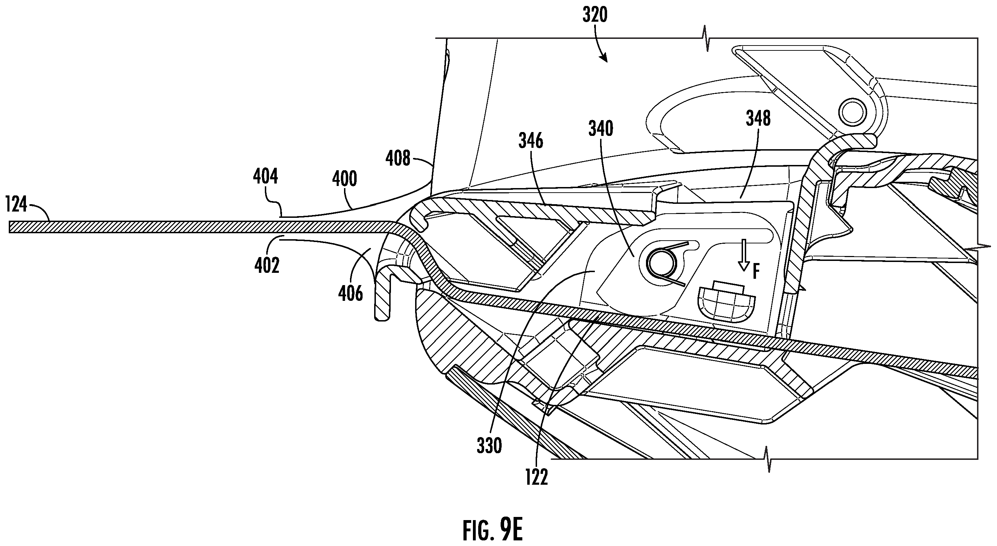

With reference now to FIGS. 9A-9D, a sleeve 400 may be mounted to the adjustment strap 122, such as at a position external to the harness adjuster, such as any of the harness adjusters 120, 220, and 320 described herein for example. The sleeve 400 may be permanently connected to the adjustment strap 122, or alternatively, may be removable therefrom. Examples of various sleeve configurations 400 are illustrated. In each of the illustrated, non-limiting embodiments, the sleeve 400 has a first opening 402, such as arranged at a first end 404 thereof, and a second opening 406 (see FIG. 9E), such as arranged at a second, opposite end 408 thereof. The first opening 402 and the second opening 406 are connected such that the adjustment strap 122 is extendable through the interior 410 of the sleeve 400, between the first end 404 and the second end 408. The sleeve 400 may be relatively tight-fitting about the adjustment strap 122 at one or more locations to push contaminants from the surface of the adjustment strap 122 as the adjustment strap 122 moves along the strap path.

In an embodiment, the sleeve 400 may be arranged within the interior of the seat bottom 28. In such embodiments, the sleeve 400 may be arranged such that the forward, first end 404 of the sleeve 400 faces toward the front 52 of the seat bottom 28 and the rear, second end 408 of the sleeve 400 faces toward the harness adjuster 320. The second end 408 of the sleeve 400 may be enlarged relative to the first end 404 of the sleeve 400, resulting in a non-uniform shape. In an embodiment, the second end 408 of the sleeve 400 has a size and/or shape complementary to the forward end 331 of the harness adjuster 320. In such embodiments, the sleeve 400 may be positioned to at least partially overlap or enclose the forward end 331 of the harness adjuster 320. In an embodiment, the sleeve 400 is configured such that a substantial entirety of the harness adjuster 320 is receivable within the hollow interior 410 thereof via the opening 406 formed in the second end 408. However, embodiments where the second end 408 of the sleeve 400 is positioned near the front 52 of the seat bottom 28 and the first end 404 of the sleeve 400 is located proximate the harness adjuster 320 are also contemplated herein. Further, embodiments where the second end 408 of the sleeve 400 has a substantially identical configuration to a first end 404 of the sleeve 400 are also contemplated herein.

Embodiments where the sleeve 400 is connected to a portion of the adjustment strap 122 arranged at an exterior of the seat bottom 28 are also within the scope of the disclosure. For example, as shown in FIG. 9E, the second end 408 of the sleeve 400 may be arranged proximate the cover 346 or alternatively or additionally, proximate a release lever operable to rotate the lever 340 of the harness adjuster 320 to release the tension applied to the adjustment strap 122.

The sleeve 400 may be formed from any suitable material. Examples of a such a material include but are not limited to, rubber, plastic, thermoplastic elastomer, and a tightly-woven material. In an embodiment, the sleeve 400 is formed from a rigid material, and in another embodiment, the sleeve 400 is formed from a flexible material. Further, an exterior surface of the sleeve 400 may have a smooth continuous configuration, such as the frustonical or umbrella shape shown in FIGS. 9B, 9D, and 9E. Alternatively, the sleeve 400 may have a stepped configuration, such as shown in FIG. 9A. The sleeve 400 may be fixed in position relative to the seat shell 25, or alternatively, may be movably arranged relative to the child seat 24. The sleeve 400 may be arranged in sliding engagement with the adjustment strap 122. Accordingly, the sleeve 400 may move with the adjustment strap 122 and may move relative to the adjustment strap 122. As the sleeve 400 slides relative to the adjustment strap 122, such as along the longitudinal axis L thereof, a surface of the sleeve 400 is frictionally engaged with an adjacent surface of the adjustment strap 122. To achieve this frictional engagement, the first opening 402 formed in the sleeve 400 may have a size and/or shape complementary to, and in some embodiments substantially identical to, a cross-section of the adjustment strap 122. However, in some embodiments, the size of the first opening 402 may be just slightly larger than the adjustment strap 122 to facilitate movement of the adjustment strap 122 relative to the sleeve 400. As the adjustment strap 122 moves relative to the sleeve 400, the sliding engagement between the first end 404 of the sleeve 400 and the adjacent surface of the adjustment strap 122 blocks particles and debris from moving with the adjustment strap 122 into the interior 410 of the sleeve 400.

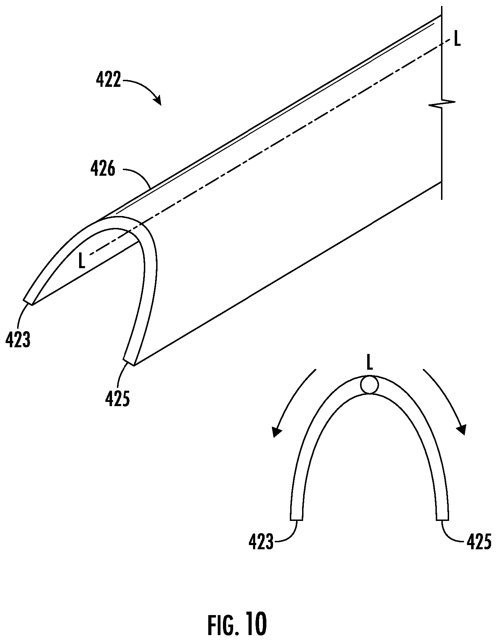

In each of the embodiments illustrated and described with reference to FIGS. 3A-9E, the adjustment strap 122 has been illustrated and described as having a substantially linear cross-section as the adjustment strap 122 moves along the strap path relative to the child seat 24 and the harness adjuster 120, 220, 320. However, in an embodiment, the cross-section of the adjustment strap may have a non-linear configuration or a non-planar configuration at or proximate the harness adjuster. With reference now to FIG. 10, an example of an adjustment strap 422 having a non-linear or non-planar cross-sectional configuration is shown. The adjustment strap 422 illustrated in the FIG. has a curved configuration, with the curvature extending perpendicular to the longitudinal axis L of the adjustment strap 422. For example, the adjustment strap 422 may have a generally inverted U-shaped configuration, with a center of the adjustment strap 422, aligned with the central longitudinal axis L of the adjustment strap 422, being arranged vertically above the lateral edges 423, 425 of the adjustment strap 422. In such a configuration, the gravitational forces acting on any particles arranged at the upper surface 426 of the adjustment strap 422 at a location offset from the center thereof, will result in a natural displacement or sliding of contaminants from the surface 426 of the adjustment strap 422.

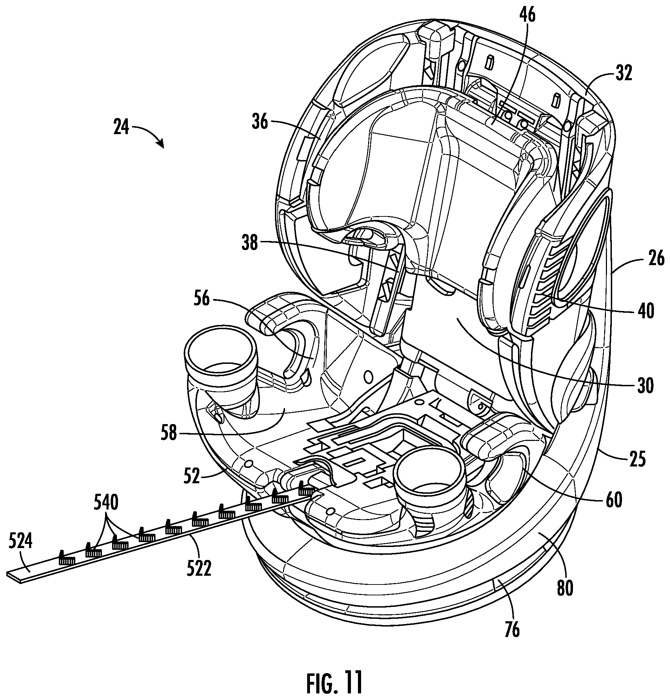

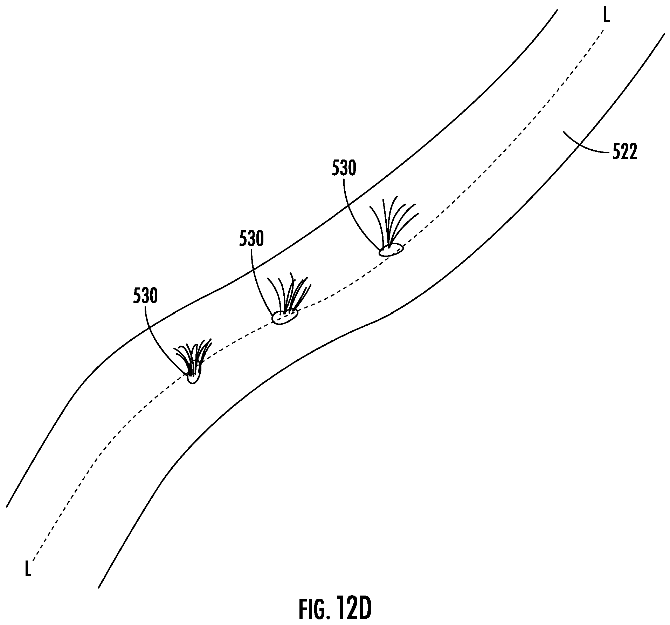

With reference now to FIGS. 11-12D, to minimize movement of contaminants and debris particles with an adjustment strap 522 along the strap path toward a harness adjuster, such as any of harness adjusters 120, 220, and 320, one or more elements may be arranged at the surface of the adjustment strap 522. In an embodiment, a plurality of features 530 are affixed to and protrude from an upper surface 526 of the adjustment strap 522. As shown, the features 530 may be arranged at intervals over the longitudinal axis L of the adjustment strap 522. The features 530 at each of the plurality of axial locations may be substantially identical or may vary over the longitudinal axis of the adjustment strap 522. A single feature 530 (FIG. 12D) may be arranged at an axial location, or alternatively, a plurality of features 530 (FIGS. 11-12C) may be arranged at an axial location.

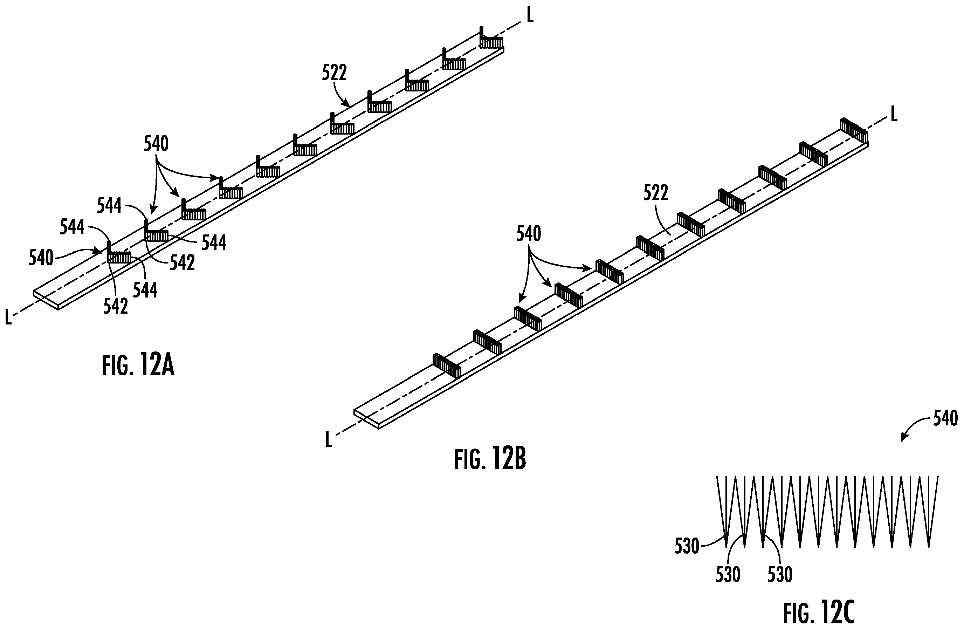

In the non-limiting embodiments, a feature 530 includes a "sew" or a group of several bristles attached to one another. However, it should be understood that features 530 having another suitable configuration operable to block movement of particles of debris are also contemplated herein. As shown, in FIG. 12D, a single sew 530 may be arranged at each axial location. Although each of the plurality of sews 530 is illustrated as being aligned with a central longitudinal axis of the adjustment strap 522, embodiments where one or more of the sews 530 are offset from the longitudinal axis L, such as staggered in a first lateral direction and/or second lateral direction, are also within the scope of the disclosure. In the non-limiting embodiments of FIGS. 12A-12C, an array 540 of sews 530 is arranged at each axial location. Each sew 530 within an array 540 may be uniform or may vary. Further, the plurality of arrays 540 arranged at the adjustment strap 522 may be substantially identical or may vary. The array of sews 530 at each axial location may span a substantial entirety of a width of the adjustment strap 522, or alternatively, may span only a portion thereof.

The arrays 540 of sews 530 may extend at a non-parallel angle relative to the longitudinal axis L. As shown in FIG. 12B and 12C, each array 540 of sews 530 may have a generally linear configuration that is oriented substantially perpendicularly to the longitudinal axis L of the adjustment strap 522. In another embodiment, as shown in FIGS. 11 and 12A, each array 540 of sews 530 has a V-shaped configuration. Although the arrays 540 are oriented such that an apex 542 of each array 540 is forward of the ends 544 of the array 540, embodiments where the apex 542 is positioned rearward of the ends 544 of the array 540 are also within the scope of the disclosure. It should be appreciated that the arrays 540 of sews 530 illustrated and described herein are intended as an example only and that arrays having any suitable configuration are contemplated herein.

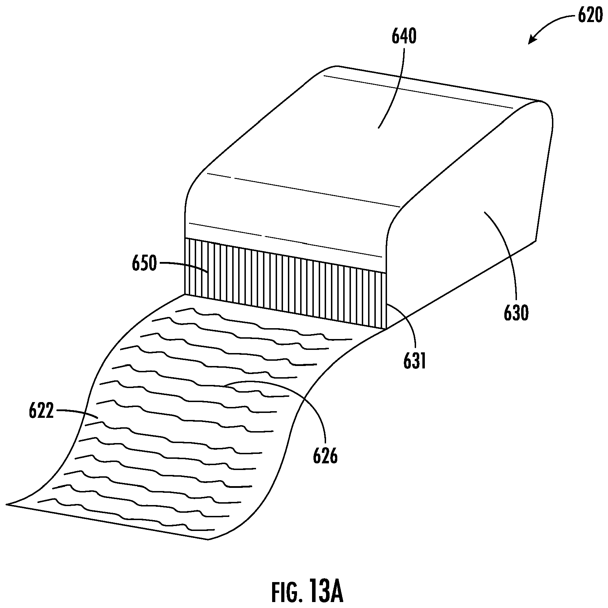

In some embodiments, the child seat system 20 may be designed to sweep contaminants and other debris from an adjustment strap 622 during movement of the adjustment strap 622 along the strap path relative to a harness adjuster 620. The harness adjuster 620 may include a housing 630 and a lever 640 rotatably mounted to the housing 630 between an engaged position and a disengaged position as previously described herein with reference to FIGS. 4A and 4B. A brush feature 650 may be installed at the harness adjuster 620 and/or the adjustment strap 622. In the non-limiting embodiment of FIG. 13A, the brush feature 650 is attached to the housing 630 of the harness adjuster 620, such as at a front end thereof for example, and extends toward the strap path. The brush feature 650 may be formed with various types of bristles, such as bristles similar to those used in window gaskets for example. The bristles may intersect the strap path and engage and brush a surface 626 of the adjustment strap 622 as the adjustment strap 622 traverses the strap path.

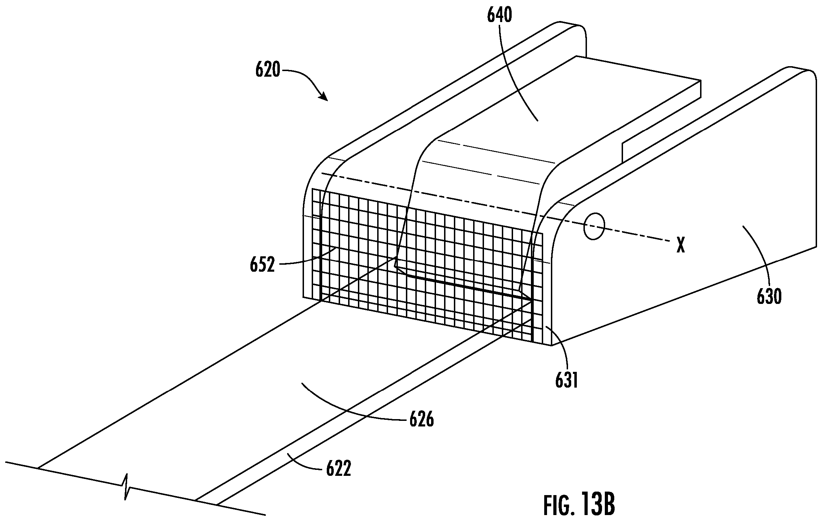

In other embodiments, such as shown in FIG. 13B, a brush feature 652 in the form of a mesh screen may be positioned at or forward of the harness adjuster 620. In an embodiment, the mesh screen 652 is mounted to the front end 631 of the harness adjuster 620. However, embodiments where the mesh screen is located separately from the harness adjuster are also contemplated herein. An edge of the mesh screen 652 may be positionable proximate or in contact with an adjacent surface 626 of the adjustment strap 622 such that as the adjustment strap 622 moves along the strap path, any particles that are larger than the openings formed in the screen 652 are blocked from further movement along the strap path into the interior of the harness adjuster 620 by the screen 652.

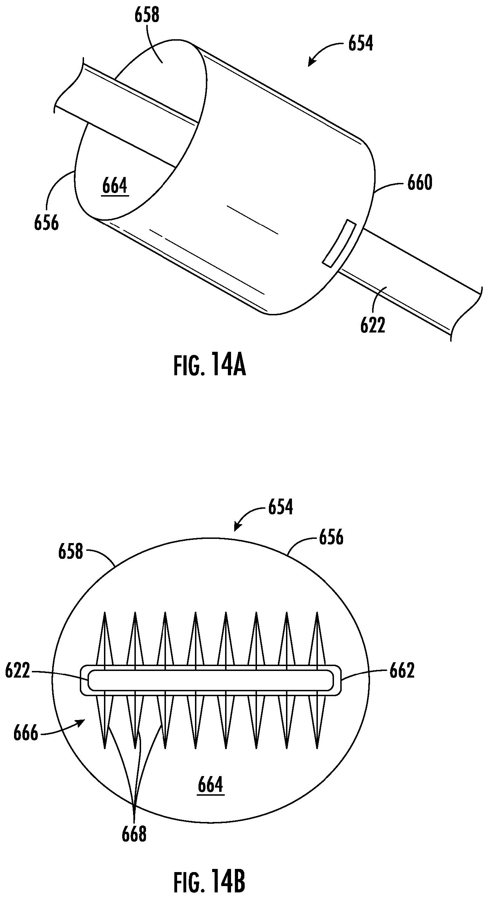

With reference to FIG. 14A and 14B, a pocket feature 654 may be slidable along a longitudinal axis L of the adjustment strap 622. The pocket feature 654 may be fixed or may be movable relative to the seat bottom 28 of the child seat 24. In the illustrated, non-limiting embodiment, the pocket feature 654 has a body including a first end 656 having a first opening 658, a second end 660 including a second opening 662 (see FIG. 14B), and a hollow interior 664 connecting the first opening to the second opening. The strap path of the adjustment strap 622 extends through the hollow interior 664 between the first and second openings 658, 662. In an embodiment, the pocket feature 654 includes a brush feature 666. The brush feature 666 may include a plurality of bristles 668 may be arranged within the interior 664 of the pocket feature 654 and that extend into strap path for engagement within an adjacent surface of the adjustment strap 622. As the adjustment strap 622 translates relative to the pocket feature 654, the bristles 668 engage and brush debris from one or more surfaces of the adjustment strap 622.

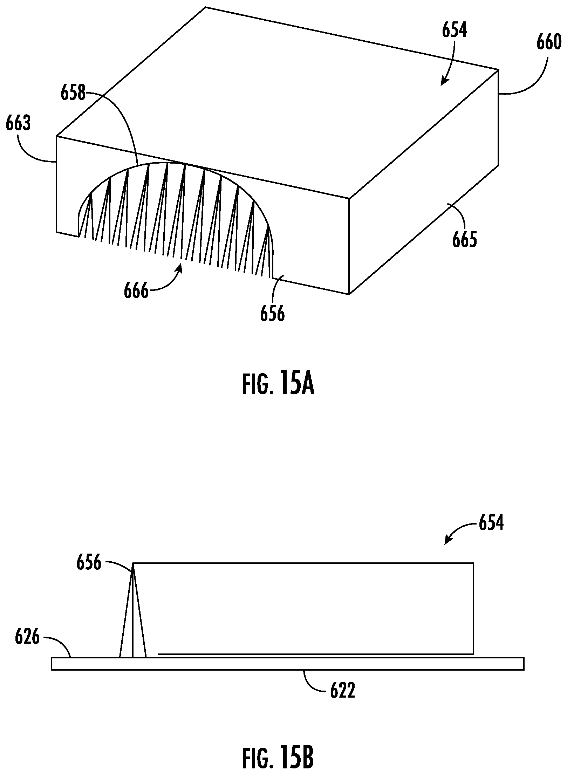

In other embodiments, such as shown in FIG. 15A and 15B, the pocket feature 654 may be positionable in overlapping arrangement with only one surface of the adjustment strap 622, such as surface 626 for example. As shown, the body of the pocket feature 654 may include a first end 656 having an opening 658 formed therein. An opposite end 660 and the lateral sides 663, 665 of the pocket feature 654 are closed to form a hollow cavity 664 within the interior of the pocket feature 654. As the illustrated pocket feature 654 slides relative to the surface 626 of the adjustment strap 622, debris and other contaminants may be swept through the brush feature 666 and captured within the interior of the pocket feature 654. Because the pocket feature 654 may have a bottom postionable in overlapping arrangement with the surface 626 of the adjustment strap 622 between the first end 656 and the second end 660, the pocket feature 654 may be easily separated from the adjustment strap 622 such as to empty the contents of the interior cavity 664 for example.

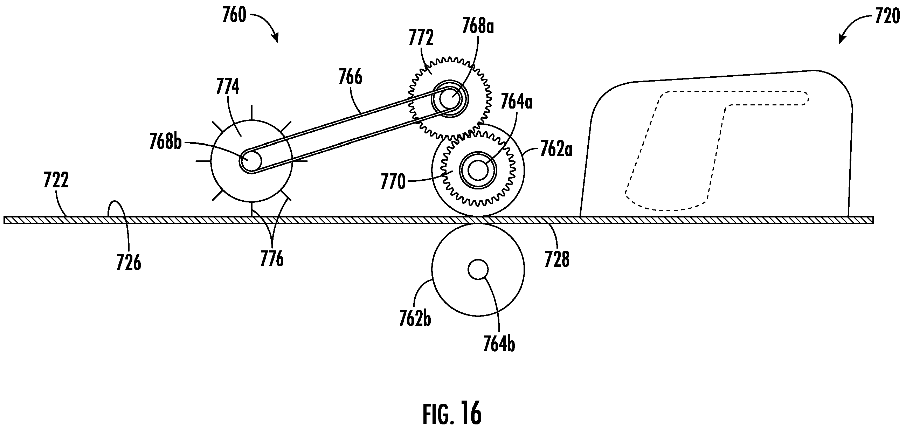

In some embodiments, a movable feature, such as a drivable sweeper 760 for example, is used to remove debris from a surface 726 of the adjustment strap 722. With reference to FIG. 16, the sweeper 760 includes at least one roller positioned proximate the strap path and engageable with the adjacent surface 726 of the adjustment strap 722. In the illustrated, non-limiting embodiment, the at least one roller includes a first, upper roller 762a positioned proximate the first surface 726 of the adjustment strap 722 and a second, lower roller 762b positioned proximate an opposite, second surface 728 of the adjustment strap 722. However, it should be appreciated that embodiments including only a single roller are also within the scope of the disclosure. Each roller 762a, 762b is rotatably mounted via a shaft 764a, 764b and is rotatable about a respective axis defined by the shaft 764a, 764b in response to movement of the adjustment strap 722 by a caregiver.

A belt 766 may be supported by a plurality of rotating shafts 768a, 768b spaced apart from one another. The belt 766 may be arranged proximate a roller, such as the upper roller 762a for example. As shown, movement of the belt 766 may be driven by rotation of the upper roller 762a. In an embodiment, a drive gear 770 is affixed to and is rotatable with the shaft 764a supporting the upper roller 762a. A driven gear 772 may be affixed to a shaft 768a associated with the belt 766 and located proximate the upper roller 762a. The drive gear 770 may be arranged in meshing engagement with the driven gear 772 such that rotation of the upper roller 762a about its axis in a first direction drives a corresponding rotation of the driven gear 772 and therefore the shaft 768a and belt 766, in a second direction. Although the upper roller 762a and belt 766 are described as having a geared transmission or connection, embodiments where another mechanism is used to transmit motion from the adjustment strap 722 to the belt 766 are also contemplated herein. In an embodiment, a cleaning wheel 774 is coupled to the shaft 768b of the belt 766 proximate the surface 726 of the adjustment strap 722. The cleaning wheel 774 may have a plurality of engagement features 776, such as teeth, bristles, or another suitable feature operable to engage debris arranged at the surface 726 of the adjustment strap 722.

In operation, the movement of the adjustment strap 722 drives rotation of the upper roller 762a, which causes a corresponding movement of the belt 766. This movement of the belt 766 drives rotation of the cleaning wheel 774 about its axis. Accordingly, the sweeper 760 is automatically drivable to clean the surface 726 of the adjustment strap 722, such as at a location upstream from a harness adjuster 720, in response to movement of the adjustment strap 722 along the strap path. The sweeper 760 may brush debris away from the strap path to prevent the debris from entering the harness adjuster 720. In an embodiment, the sweeper 760 may scoop debris from the surface 726 of the adjustment strap 722 and transfer the debris to a location away from the strap path, such as via the belt 766 for example.

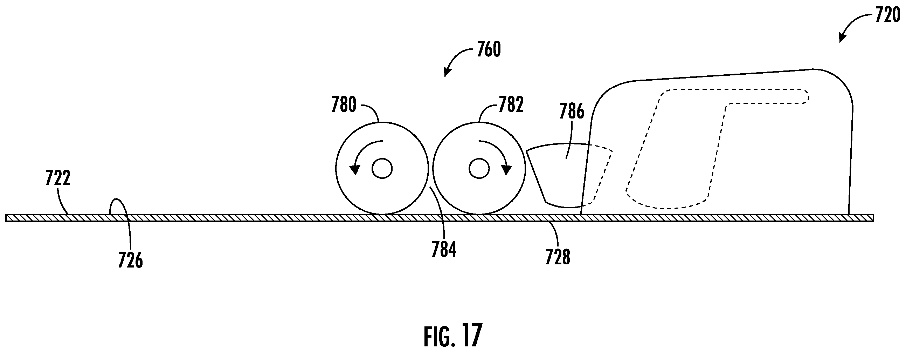

In another embodiment, illustrated in FIG. 17, a sweeper 760 includes a first roller 780 and a second roller 782, both of which are arranged proximate the same surface of the adjustment strap 722, such as upper surface 726 for example. The rollers 780, 782 are axially spaced such that a nip 784 is formed therebetween. The rollers 780, 782 may be driven independently from the adjustment strap 722. Alternatively, or in addition, at least one of the rollers 780, 782 may be drivable by movement of the adjustment strap 722 along the strap path. In the illustrated, non-limiting embodiment, the pair of rollers 780, 782 cooperate to pull debris from the surface 726 of the adjustment strap 722. As the adjustment strap 722 moves along the strap path, rotation of the rollers 780, 782 draws debris from the surface 726 of the adjustment strap 722, upwardly into the nip 784 formed between the pair of rollers 780, 782. From the nip 784, the debris may further rotate with one of the pair of rollers 780, 782 for delivery to a designated storage area. The sweeper 760 may be arranged forward of a harness adjuster 720, such as toward the front 52 of a seat bottom 28 for example. In an embodiment, a stopper 786 may be located between the rear roller 782 and the harness adjuster 720 to prevent debris removed by the roller 782 from falling behind the roller 782, near the front of the harness adjuster 720.

Although the various features operable to remove debris from the adjustment strap, or to prevent the movement of debris into a harness adjuster are described separately, it should be appreciated that any of the embodiments described herein may be combined. For example, slots 170 as described with reference to FIGS. 5 and 6 may overlap the strap path of an adjustment strap having a sleeve 400 slidably engaged therewith; a brush feature 666 as described with reference to FIGS. 13A-15B may be used in combination with an adjustment strap 422 having an inverted curvature to facilitate the natural separation of debris therefrom via gravity; and a cover 380 as described with reference to FIGS. 8A-8D may be used in combination with a drivable sweeper 760. It should be appreciated that these combinations are intended as an example only and that any combination of multiple embodiments disclosed herein is within the scope of the disclosure.

The term "about" is intended to include the degree of error associated with measurement of the particular quantity based upon the equipment available at the time of filing the application. As used herein, the term "substantially" and derivatives thereof, and words of similar import, when used to describe a size, shape, orientation, distance, spatial relationship, or other parameter includes the stated size, shape, orientation, distance, spatial relationship, or other parameter, and can also include a range up to 10% more and up to 10% less than the stated parameter, including 5% more and 5% less, including 3% more and 3% less, including 1% more and 1% less.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.
The present disclosure provides, in accordance with the following clauses:
1. A child seat installable on a vehicle seat, the child seat comprising:
   a seat bottom;
   a seat back extending from the seat bottom;
   a harness assembly connected with the seat bottom and the seat back, the harness assembly including a harness adjuster arranged at the seat bottom and an adjustment strap extending through the harness adjuster; and
   at least one cover member extending proximate a front of the harness adjuster, the adjustment strap extending about the at least one cover member, wherein a strap path defined by the at least one cover member has a serpentine configuration along which the adjustment strap is movable relative to the harness adjuster.
2. The child seat of clause 1, wherein the at least one cover member is a single cover member.
3. The child seat of clause 1, wherein the at least one cover member is a pair of cover members.
4. The child seat of clause 3, wherein the pair of cover members is in an overlapping configuration when the strap path has the serpentine configuration.
5. The child seat of clause 4, wherein the pair of cover members includes an upper cover member and a lower cover member, and in the overlapping configuration, the upper cover member is positioned between the seat bottom and the lower cover member.
6. The child seat of clause 5, wherein the adjustment strap is freely movable to loosen the harness assembly when the pair of cover members is in the overlapping configuration.
7. The child seat of clause 5, wherein the lower cover member is movable relative to the upper cover member and the seat bottom in response to application of a force to an exposed end of the adjustment strap.
8. The child seat of clause 4, wherein the pair of cover members is transformable to a second configuration in response to application of a force to an exposed end of the adjustment strap.
9. The child seat of clause 8, wherein in the second configuration, the pair of cover members are separated from one another.
10. The child seat of clause 8, wherein in the second configuration, the strap path defined by the pair of cover members has a generally linear configuration.
11. The child seat of clause 8, wherein the pair of cover members includes an upper cover member and a lower cover member, and in a second configuration, the upper cover member remains in contact with an upper surface of the adjustment strap.
12. The child seat of clause 1, wherein the at least one cover member is formed from a fabric material.
13. A child seat installable on a vehicle seat, the child seat comprising:
   a seat bottom having a strap receiving surface, the strap receiving surface defining a strap path and at least one slot to receive debris;
   a seat back extending from the seat bottom; and
   a harness assembly connected with the seat bottom and the seat back, the harness assembly including a harness adjuster arranged at the seat bottom and an adjustment strap extending through the harness adjuster, the adjustment strap being selectively movable along the strap path.
14. The child seat of clause 13, wherein the at least one slot is positioned between a front of the seat bottom and the harness adjuster.
15. The child seat of clause 14, wherein the at least one slot is positioned proximate a front of the harness adjuster.
16. The child seat of clause 13, wherein the harness adjuster includes a housing and the at least one slot is vertically aligned with the housing.
17. The child seat of clause 13, wherein the at least one slot is positioned in overlapping arrangement with the strap path.
18. The child seat of clause 13, wherein the at least one slot is arranged at an angle relative to a longitudinal axis of the adjustment strap.
19. The child seat of clause 13, wherein the harness adjuster includes a lever rotatable about an axis of rotation to selectively lock the adjustment strap against movement along the strap path, the at least one slot being parallel to the axis of rotation.
20. The child seat of clause 13, wherein the at least one slot includes a plurality of slots, the plurality of slots being axially spaced along the strap path.
21. The child seat of clause 13, wherein the at least one slot arranged at the seat bottom is configured to receive debris during movement of the adjustment strap along the strap path.
22. A child seat installable on a vehicle seat, the child seat comprising:
   a seat bottom;
   a seat back extending from the seat bottom;
   a harness assembly connected with the seat bottom and the seat back, the harness assembly including harness adjuster arranged at the seat bottom and an adjustment strap extending through the harness adjuster; and
   wherein the adjustment strap has a non-linear configuration such that debris arranged at the adjustment strap is configured to fall therefrom via gravity.
23. The child seat of clause 22, wherein the adjustment strap has a curved configuration including a curvature that extends perpendicular to a longitudinal axis of the adjustment strap.
24. The child seat of clause 22, wherein the adjustment strap has the non-linear configuration forward of the harness adjuster.
25. The child seat of clause 22, wherein the adjustment strap has the non-linear configuration at the harness adjuster.
26. The child seat of clause 22, wherein a portion of the adjustment strap at a central longitudinal axis of the adjustment strap is positioned vertically above a lateral side of the adjustment strap.
27. The child seat of clause 22, wherein an uppermost surface of the adjustment strap is arranged at a longitudinal axis of the adjustment strap.
28. The child seat of clause 22, wherein the adjustment strap has an inverted U-shape.
29. A child seat installable on a vehicle seat, the child seat comprising:
   a seat bottom;
   a seat back extending from the seat bottom;
   a harness assembly connected with the seat bottom and the seat back, the harness assembly including a harness adjuster arranged at the seat bottom and an adjustment strap extending through the harness adjuster; and
   a sleeve mounted on the adjustment strap at a location external to the harness adjuster, wherein the sleeve is configured to frictionally slide relative to the adjustment strap as the adjustment strap moves relative to the harness adjuster.
30. The child seat of clause 29, wherein the sleeve is arranged at a portion of the adjustment strap external to the seat bottom.
31. The child seat of clause 29, wherein the sleeve is movable related to the seat bottom.
32. The child seat of clause 29, wherein the sleeve is fixed related to the seat bottom.
33. The child seat of clause 29, wherein the sleeve has a body including a first opening connected to a second opening, the adjustment strap extending through the body between the first opening and the second opening.
34. The child seat of clause 33, wherein a cross-sectional area of the first opening is substantially identical to the cross-sectional area of the adjustment strap.
35. The child seat of clause 29, wherein the sleeve is formed from a thermoplastic elastomer.
36. The child seat of clause 29, wherein the sleeve is formed from a tightly-woven material.
37. A child seat installable on a vehicle seat, the child seat comprising:
   a seat bottom;
   a seat back extending from the seat bottom;
   a harness assembly connected with the seat bottom and the seat back, the harness assembly including a harness adjuster arranged at the seat bottom and an adjustment strap extending through the harness adjuster; and
   a cover mounted to at least one of the harness adjuster and the seat bottom, the cover being arranged at a location external to the harness adjuster, wherein the cover is at least one of shaped and positioned to direct debris away from the harness adjuster.
38. The child seat of clause 37, wherein the harness assembly further comprises a release actuator and the cover is shaped and/or positioned to direct the debris away from the release actuator.
39. The child seat of clause 37, wherein the cover surrounds a front of the harness adjuster and has a front opening through which the adjustment strap is extendable into the harness adjuster.
40. The child seat of clause 37, wherein the harness adjuster is substantially enclosed by the cover.
41. The child seat of clause 37, wherein the cover is arranged at a peak of the harness adjuster.
42. The child seat of clause 41, wherein the harness adjuster includes a lever rotatable about an axis and the cover extends over a pivoting portion of the lever.
43. The child seat of clause 41, wherein the harness adjuster is configured to prevent the debris from entering the harness adjuster from above.

## Claims

1. A child seat installable on a vehicle seat, the child seat comprising
a seat bottom;
a seat back extending from the seat bottom;
a harness assembly connected with the seat bottom and the seat back, the harness assembly including a harness adjuster arranged at the seat bottom and an adjustment strap extending through the harness adjuster; and
wherein the harness adjuster includes a lever rotatable about an axis and a clearance for receiving the adjustment strap at least partially defined by the lever, wherein the clearance is disposed vertically above the lever.

2. The child seat of claim 1, wherein the lever is rotatable about the axis to transform a tension applied to the adjustment strap by the harness adjuster, the lever being rotatable toward a seat support surface of the seat bottom to reduce the tension applied to the adjustment strap.

3. The child seat of claim 1 or 2, wherein the harness adjuster is arranged within a cavity formed in a seat support surface of the seat bottom, the harness adjuster being offset from a bottom of the cavity to prevent debris on the bottom of the cavity from reaching the harness adjuster.

4. The child seat of claim 1, 2 or 3, wherein the harness assembly is positioned such that the adjustment strap is arranged at an angle relative to a horizontal plane at a location directly upstream from the harness adjuster to prevent debris at the adjustment strap from entering the harness adjuster.

5. The child seat of any preceding claim, wherein an opening is formed at the seat bottom and the adjustment strap extends through the opening to an exterior of the child seat, the clearance of the harness adjuster being positioned vertically above the opening.

6. A child seat installable on a vehicle seat, the child seat comprising
a seat bottom;
a seat back extending from the seat bottom;
a harness assembly connected with the seat bottom and the seat back, the harness assembly including a harness adjuster arranged at the seat bottom and an adjustment strap extending through the harness adjuster and through an opening formed in the seat bottom to an exterior of the seat bottom; and
wherein and the harness adjuster is configured to apply a tension to the adjustment strap at an area of contact, and the adjustment strap extending in at least one direction from the area of contact has a sloped configuration.

7. The child seat of claim 6, wherein the adjustment strap is selectively movable along a strap path and the area of contact forming a vertical peak of the strap path proximate the harness adjuster.

8. The child seat of claim 6 or 7, wherein an opening is formed at the seat bottom and the adjustment strap extends through the opening to an exterior of the child seat, wherein the area of contact is positioned vertically above the opening.

9. The child seat of claim 8, wherein the adjustment strap extends at an angle between the area of contact and the opening.

10. The child seat of any of claims 6 to 9, wherein the harness adjuster includes a lever rotatable about an axis and a clearance for receiving the adjustment strap at least partially defined by the lever, wherein the clearance is disposed vertically above the lever.

11. The child seat of claim 10, wherein a thickness of the clearance varies based on a rotational position of the lever.

12. The child seat of any of claims 6 to 11, wherein the harness adjuster is arranged within a cavity formed at a seat support surface of the seat bottom, the harness adjuster being offset from a bottom of the cavity.
